(19) Europäisches Patentamt
European Patent Office
Office européen des brevets

(11) **EP 3 336 115 A1**

(12) **EUROPÄISCHE PATENTANMELDUNG**

(43) Veröffentlichungstag:
**20.06.2018   Patentblatt 2018/25**

(51) Int Cl.:
**C08G 18/66** *(2006.01)*   **C08G 18/71** *(2006.01)*
**C08G 18/30** *(2006.01)*   **C08G 18/32** *(2006.01)*
**C08G 18/48** *(2006.01)*   **C08K 5/315** *(2006.01)*

(21) Anmeldenummer: **16204942.3**

(22) Anmeldetag: **19.12.2016**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(71) Anmelder: **Covestro Deutschland AG
51373 Leverkusen (DE)**

(72) Erfinder: **Die Erfindernennung liegt noch nicht vor**

(74) Vertreter: **Levpat
c/o Covestro AG
Gebäude 4825
51365 Leverkusen (DE)**

(54) **VERFAHREN ZUR ERNIEDRIGUNG VON EMISSIONEN EINES POLYURETHANSCHAUMSTOFFES**

(57)    Die vorliegende Erfindung betrifft ein Verfahren zur Herstellung von Polyurethanen, bevorzugt Polyurethanschaumstoffen durch Umsetzung von gegenüber Isocyanaten reaktionsfähigen Wasserstoffatomen aufweisenden Verbindungen mit Di- und/oder Polyisocyanaten in Gegenwart von einer oder mehrerer Verbindungen ausgewählt aus der Gruppe bestehend aus:

$$NC\text{-}CHR^1\text{-}CON\ R^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m\ Y^{m+} \qquad (IV),$$

wobei
- X für $NR^6R^7$, $OR^8$, $CONR^9R^{10}$ oder $COOR^{11}$,
- $R^1$ bis $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen.
    Weiter betrifft die vorliegende Erfindung die aus diesem Verfahren erhältlichen Polyurethane, sowie den Einsatz solcher Polyurethane beispielsweise im Innenraum von Automobilen.

EP 3 336 115 A1

**Beschreibung**

Es ist aus dem Stand der Technik bekannt, dass Polyurethanschaumstoffe Aldehyde emittieren können, wobei diese Aldehydemissionen im Allgemeinen unerwünscht sind. Nachgewiesen werden diese Emissionen z.B. bei Messungen nach der VDA 275 (Flaschenmethode, 3h 60°C) oder auch nach der VDA 276 (Emissionskammerprüfung, 65°C).

Sowohl EP2138520 als auch WO2015082316 beschreiben, dass bestimmte Cyanacetamide geeignet sein können, um die Emissionen von Formaldehyd aus Schaumstoffen zu reduzieren. WO2015082316 beschreibt darüber hinaus, dass bestimmte Ester der Cyanessigsäure und von 3Oxo-Carbonsäuren hierzu geeignet sein können.

Hydrazide wie Acethydrazid wurden ebenfalls als geeignete Additive zur Verringerung von Formaldehyden beschrieben (EP 1674515). Auch Polyhydrazodicarbonamide, die aus der Umsetzung von Hydrazin mit Isocyanaten hergestellt werden können, sind hierzu geeignet. Diese haben allerdings den Nachteil, als Partikel vorzuliegen und Schaumstoffe hart zu machen. Das ist bei Weichschaumstoffen nicht gewünscht. Das gleiche Problem erscheint bei der Nutzung von Polyharnstoffdispersionen, die ebenfalls geeignet sind, um Formaldehydemissionen aus Schaumstoffen zu reduzieren.

Aufgabe der vorliegenden Erfindung war die Bereitstellung von Polyurethanen, bevorzugt Polyurethanschaumstoffen, die eine noch geringere Formaldehydemission als Polyurethane, bzw. Polyurethanschaumstoffe des Standes der Technik aufweisen. Diese Aufgabe konnte mit folgendem Verfahren gelöst werden:

Gegenstand der vorliegenden Erfindung ist ein Verfahren zur Herstellung von Polyurethanen, bevorzugt Polyurethanschaumstoffen durch Umsetzung von gegenüber Isocyanaten reaktionsfähigen Wasserstoffatomen aufweisenden Verbindungen mit Di- und/oder Polyisocyanaten in Gegenwart von einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$ bis $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen.

Gegenstand der vorliegenden Erfindung sind auch die nach dem beschriebenen Verfahren erhältlichen Polyurethane, bzw. Polyurethanschaumstoffe.

Gegenstand der vorliegenden Erfindung ist insbesondere ein Verfahren zur Herstellung von Polyurethanen, bevorzugt Polyurethanschaumstoffen, bei dem

A1 gegenüber Isocyanaten reaktionsfähige Wasserstoffatome aufweisende Verbindungen mit einer OH-Zahl gemäß DIN 53240 von $\geq$ 15 bis < 260 mg KOH/g,

A2 gegebenenfalls gegenüber Isocyanaten reaktionsfähige Wasserstoffatome aufweisende Verbindungen mit einer OH-Zahl gemäß DIN 53240 von $\geq$ 260 bis < 4000 mg KOH/g,

A3 Wasser und/oder physikalischen Treibmittel,

A4 ggf. Hilfs- und Zusatzstoffe wie

    a) Katalysatoren,
    b) oberflächenaktive Zusatzstoffe,
    c) Pigmente und/oder Flammschutzmittel

A5 eine oder mehrere Verbindungen ausgewählt aus der Gruppe bestehend aus:

$$NC\text{-}CHR^1\text{-}CONR^{12}\text{-}X \qquad (I),$$

NC-CHR$^2$-CONR$^3$-Aryl  (II),

NC-CHR$^4$-CO$_2$H  (III),

[NC-CHR$^5$-CO$_2$]$_m$Y$^{m+}$  (IV),

wobei

- X für NR$^6$R$^7$, OR$^8$, CONR$^9$R$^{10}$ oder COOR$^{11}$,
- R$^1$ bis R$^{12}$ jeweils unabhängig voneinander für H, eine gegebenenfalls substituierte C$_1$-C$_8$ Alkylgruppe oder eine gegebenenfalls substituierte Arylgruppe,
- Y für ein ein- oder zweiwertiges Kation, und
- m für 1 oder 2 stehen,

und
B Di- und/oder Polyisocyanate
miteinander umgesetzt werden.

Die Einsatzmenge der erfindungsgemäßen Komponente A5 bezogen auf 1 kg der Komponenten A1 und B beträgt 1 bis 100 g, bevorzugt 5 bis 50 g (Die Angabe 1 kg bezieht sich auf die Summe aus A1 und B).

Ganz besonders bevorzugt (Alternative I) ist ein Verfahren zur Herstellung von Polyurethanen, bevorzugt Polyurethanschaumstoffen bei dem

A1 75 bis 99,0 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von ≥ 15 bis <260 mg KOH/g,

A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von ≥ 260 bis < 4000 mg KOH/g,

A3 0,5 bis 24,5 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 1 bis 100 g pro kg der Komponenten A1 und B, bevorzugt 5 bis 50 g pro kg der Komponenten A1 und B (Summer aus A1 und B) einer oder mehrerer Verbindungen ausgewählt aus der Gruppe bestehend aus:

NC-CHR$^1$-CONR$^{12}$-X  (I),

NC-CHR$^2$-CONR$^3$-Aryl  (II),

NC-CHR$^4$-CO$_2$H  (III),

[NC-CHR$^5$-CO$_2$]$_m$Y$^{m+}$  (IV),

wobei

- X für NR$^6$R$^7$, OR$^8$, CONR$^9$R$^{10}$ oder COOR$^{11}$,
- R$^1$ bis R$^{12}$ jeweils unabhängig voneinander für H, eine gegebenenfalls substituierte C$_1$-C$_8$ Alkylgruppe oder eine gegebenenfalls substituierte Arylgruppe,
- Y für ein ein- oder zweiwertiges Kation, und
- m für 1 oder 2 stehen,

und

B Di- oder Polyisocyanaten,

miteinander umgesetzt werden,

wobei alle Gewichtsteilangaben der Komponenten A1 bis A4 so normiert sind, dass die Summe der Gewichtsteile der Komponenten A1+A2+A3+A4 in der Zusammensetzung 100 ergeben.

Ebenfalls ganz besonders bevorzugt (Alternative II) ist ein Verfahren zur Herstellung von Polyurethanen, bevorzugt Polyurethanschaumstoffen bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 15 bis < 260 mg KOH/g,

A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 25 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

d) Katalysatoren,

e) oberflächenaktive Zusatzstoffe,

f) Pigmente und/oder Flammschutzmittel,

A5 1 bis 100 g pro kg der Komponenten A1 und B, bevorzugt 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$ bis $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen,

und

B Di- oder Polyisocyanaten,

miteinander umgesetzt werden,

wobei alle Gewichtsteilangaben der Komponenten A1 bis A4 so normiert sind, dass die Summe der Gewichtsteile der Komponenten A1+A2+A3+A4 in der Zusammensetzung 100 ergeben.

Es wurde gefunden, dass Verbindungen der Formeln (I) bis (IV) (Komponente A5) überraschenderweise besser als Aldehydfänger wirken als die bisher bekannten Verbindungen. Ein weiterer Gegenstand der Erfindung ist daher die Verwendung einer oder mehrerer Verbindungen der Formeln (I) bis (IV) in Polyurethanzusammensetzungen oder in Verfahren zur Herstellung von Polyurethanen, bevorzugt Polyurethanschaumstoffen, zur Erniedrigung der Formaldehydemission der daraus resultierenden Polyurethane, bzw. Polyurethanschaumstoffe.

Die Herstellung von Schaumstoffen auf Isocyanatbasis ist an sich bekannt und z.B. in DE-A 1 694 142, DE-A 1 694 215 und DE-A 1 720 768 sowie im Kunststoff-Handbuch Band VII, Polyurethane, herausgegeben von Vieweg und Höchtlein, Carl Hanser Verlag München 1966, sowie in der Neuauflage dieses Buches, herausgegeben von G. Oertel, Carl Hanser Verlag München, Wien 1993, beschrieben.

Für die Herstellung der Schaumstoffe auf Isocyanatbasis können die nachfolgend näher beschriebenen Komponenten eingesetzt werden.

Komponente A1

Ausgangskomponenten gemäß Komponente A1 sind Verbindungen mit mindestens zwei gegenüber Isocyanaten reaktionsfähigen Wasserstoffatomen mit einer OH-Zahl gemäß DIN 53240 von ≥ 15 bis < 260 mg KOH/g, bevorzugt ≥ 20 bis ≤ 150 mg KOH/g, besonders bevorzugt ≥ 20 bis ≤ 50 mg KOH/g, ganz besonders bevorzugt ≥ 25 bis ≤ 40 mg KOH/g. Hierunter fallen z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der EP-A 0 007 502, Seiten 8 - 15, beschrieben werden. Mindestens zwei Hydroxylgruppen aufweisenden Polyether und Polyester sind erfindungsgemäß bevorzugt. Besonders bevorzugt sind mindestens zwei Hydroxylgruppen aufweisenden Polyether.

Die Herstellung der Polyetherpolyole erfolgt nach bekannten Methoden, vorzugsweise durch basenkatalysierte Polyaddition von Alkylenoxiden an polyfunktionelle, aktive Wasserstoffatome aufweisende Starterverbindungen, wie z.B. Alkohole oder Amine. Beispielhaft seien genannt: Ethylenglykol, Diethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke, Wasser, Methylamin, Ethylamin, Propylamin, Butylamin, Anilin, Benzylamin, o- und p-Toluidin, α,β- Naphthylamin, Ammoniak, Ethylendiamin, Propylendiamin, 1,4-Butylendiamin, 1,2-, 1,3-, 1,4-, 1,5- und/oder 1,6-Hexamethylendiamin, o-, m-, und p-Phenylendiamin, 2,4-, 2,6-Toluylendiamin, 2,2'-, 2,4- und 4,4'-Diaminodiphenylmethan und Diethylendiamin.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann nur mit einem monomeren Epoxid durchgeführt werden, aber auch statistisch oder auch blockweise mit zwei oder drei unterschiedlichen monomeren Epoxiden erfolgen.

Verfahren zur Herstellung solcher Polyetherpolyole werden in "Kunststoffhandbuch, Band 7, Polyurethane", in "Reaction Polymers" sowie z.B. in US-A 1 922 451, US-A 2 674 619, US-A 1 922 459, US-A 3 190 927 und US-A 3 346 557 beschrieben.

Die Polyaddition kann beispielsweise auch DMC-katalysiert erfolgen. DMC-Katalysatoren und deren Verwendung zur Herstellung von Polyetherpolyolen sind beispielsweise beschrieben in US 3 404 109, US 3 829 505, US 3 941 849, US 5 158 922, US 5 470 813, EP-A 700 949, EP-A 743 093, EP-A 761 708, WO-A 97/40086, WO-A 98/16310 und WO-A 00/47649.

In einer besonders bevorzugten Ausführungsform enthält Komponente A1 mindestens 30 Gew.-% mindestens eines Polyoxyalkylen-Polymers, bestehend aus einem Starter, Propylenoxid und ggf. Ethylenoxid und ggf. einem Endblock aus Ethylenoxid, wobei das Gesamtgewicht der Endblöcke im Mittel 3-20 Gew.-%, bevorzugt 5-15, besonders bevorzugt 6-10 Gew.-% bezogen auf das gesamte Gewicht aller Polyoxyalkylen-Polymere beträgt.

Neben den oben beschriebenen "einfachen" Polyetherpoyolen können auch Polyethercarbonatpolyole im erfindungsgemäßen Verfahren eingesetzt werden. Polyethercarbonatpolyole können z.B. durch katalytische Umsetzung von Ethylenoxid und Propylenoxid, ggf. weiteren Alkylenoxiden, und Kohlendioxid in Anwesenheit von H-funktionellen Startersubstanzen erhalten werden (siehe z.B. EP-A 2046861).

Methoden zur Herstellung von Polyesterpolyolen sind ebenfalls gut bekannt und z.B. beschrieben in den beiden oben genannten Literaturstellen ("Kunststoffhandbuch, Band 7, Polyurethane", "Reaction Polymers"). Die Polyesterpolyole werden i.a. durch Polykondensation von mehrfunktionellen Carbonsäuren oder deren Derivaten, wie z.B. Säurechloriden oder -anhydriden, mit mehrfunktionellen Hydroxylverbindungen hergestellt.

Als mehrfunktionelle Carbonsäuren können beispielsweise verwendet werden: Adipinsäure, Phthalsäure, Isophthalsäure, Terephthalsäure, Oxalsäure, Bernsteinsäure, Glutarsäure, Azelainsäure, Sebacinsäure, Fumarsäure oder Maleinsäure.

Als mehrfunktionelle Hydroxylverbindungen können beispielsweise verwendet werden: Ethylenglykol, Diethylenglykol, Triethylenglykol, 1,2-Propylenglykol, Dipropylenglykol, 1,3-Butandiol, 1,4-Butandiol, 1,6-Hexandiol, 1,12-Dodecandiol, Neopentylglykol, Trimethylolpropan, Triethylolpropan oder Glycerin.

Die Herstellung der Polyesterpolyole kann weiterhin auch durch Ringöffnungspolymerisation von Lactonen (z.B. Caprolacton) mit Diolen und/oder Triolen als Starter erfolgen.

Als Hydroxylgruppen-aufweisende Verbindungen der Komponente A1 können auch Polymerpolyole, PHD-Polyole und PIPA-Polyole in Komponente A1 eingesetzt werden. Polymerpolyole sind Polyole, die Anteile von durch radikalische Polymerisation geeigneter Monomere wie Styrol oder Acrylnitril in einem Basispolyol erzeugten festen Polymeren enthalten. PHD (Polyharnstoffdipsersion)-Polyole werden beispielsweise hergestellt durch in situ Polymerisation eines Isocyanats oder einer Isocyanat-Mischung mit einem Diamin und/oder Hydrazin in einem Polyol, vorzugsweise einem Polyetherpolyol. Vorzugsweise wird die PHD-Dispersion hergestellt durch Umsetzung einer Isocyanat-Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin in einem Polyetherpolyol, vorzugsweise einem Polyetherpolyol, hergestellt durch Alkoxylierung eines trifunktionellen Starters (wie beispielsweise Glycerin und/oder Trimethylolpropan). Verfahren zur Herstellung von PHD-Dispersionen sind beispielsweise beschrieben in US 4,089,835 und US 4,260,530. Bei den PIPA-Polyolen handelt es sich um durch Polyisocyanat-Polyaddition mit Alkanolaminen-modifizierte Polyetherpolyole, wobei das Polyetherpolyol eine Funktionalität von 2,5 bis 4 und eine Hydroxylzahl von $\geq$ 3 mg KOH/g bis $\leq$ 112 mg KOH/g (zahlenmittleres Molekulargewicht 500 bis 18000) aufweist. PIPA-Polyole sind in GB 2 072 204 A, DE 31 03 757 A1 und US 4 374 209 A eingehend beschrieben.

Komponente A2

Gegebenenfalls werden als Komponente A2 Verbindungen mit mindestens zwei gegenüber Isocyanaten reaktionsfähigen Wasserstoffatomen und einer OH-Zahl gemäß DIN 53240 von $\geq$ 260 bis < 4000 mg KOH/g, bevorzugt $\geq$ 400 bis $\leq$ 3000 mg KOH/g, besonders bevorzugt $\geq$ 1000 bis $\leq$ 2000 mg KOH/g eingesetzt.

Hierunter sind Hydroxylgruppen und gegebenenfalls Aminogruppen, Thiolgruppen oder Carboxylgruppen aufweisende Verbindungen zu verstehen, vorzugsweise Hydroxylgruppen und gegebenenfalls Aminogruppen aufweisende Verbindungen. Diese Verbindungen weisen bevorzugt 2 bis 8, besonders bevorzugt 2 bis 4, gegenüber Isocyanaten reaktionsfähige Wasserstoffatome auf. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan), Tetraole (z.B. Pentaerythrit), Hexaole (z.B. Sorbit) oder Aminoalkohole (Ethanolamin, Diethanolamin, Triethanolamin) sein.

Es können aber auch kurzkettige Polyetherpolyole, Polyethercarbonatpolyole, Polyesterpolyole, Polyestercarbonatpolyole, Polythioetherpolyole, Polyacrylatpolyole oder Polycarbonatpolyole sein. Zur Herstellung dieser Polymere (Edukte, Verfahren) wird auf die Ausführungen zu Komponente A1 verwiesen.

Weitere Beispiele für Verbindungen gemäß Komponente A2 werden in EP-A 0 007 502, Seiten 16 - 17, beschrieben.

Komponente A3

Als Komponente A3 werden Wasser und/oder physikalische Treibmittel eingesetzt. Als physikalische Treibmittel werden beispielsweise Kohlendioxid und/oder leicht flüchtige organische Substanzen als Treibmittel eingesetzt.

Komponente A4

Als Komponente A4 werden Hilfs- und Zusatzstoffe verwendet wie

a) Katalysatoren (Aktivatoren),
b) oberflächenaktive Zusatzstoffe (Tenside), wie Emulgatoren und Schaumstabilisatoren insbesodere solche mit niedriger Emission wie beispielsweise Produkte der Tegostab® LF-Serie,
c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013), insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt a) Harnstoff, Derivate des Harnstoffs und/oder b) die oben genannten Amine und Aminoether, dadurch gekennzeichnet, dass die Amine und Aminoether eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen. Als Beispiele für besonders bevorzugte Katalysatoren seien genannt: (3-Dimethylaminopropylamin)-Harnstoff, 1,1'-((3-(dimethylamino)propyl)imino)bis-2-propanol, N-[2-[2-(dimethylamino)ethoxy]ethyl]-N-methyl-1,3-propanediamin und 3-Dimethylaminopropylamin.

Komponente A5

Komponente A5 umfasst Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$ bis $R^{12}$ jeweils unabhängig voneinander für H, eine gegebenenfalls substituierte $C_1\text{-}C_8$ Alkylgruppe oder eine gegebenenfalls substituierte Arylgruppe,
- Y für ein ein- oder zweiwertiges Kation, und
- m für 1 oder 2 stehen.

In einer bevorzugten Variante stehen die Reste R1 bis R12 jeweils unabhängig voneinander für H oder eine $C_1\text{-}C_6$ Alkylgruppe. In einer besonders bevorzugten Variante stehen die Reste R1, R2, R4 und R5 unabhängig voneinander für H, die Reste R3 und R6 bis R12 unabhängig voneinander für H oder eine $C_1\text{-}C_6$ Alkylgruppe.

Von den Verbindungen (I) bis (IV) sind die Verbindungen (I) und (II) bevorzugt im erfindungsgemäßen Verfahren einzusetzen.

Komponente B

Als Komponente B werden aliphatische, cycloaliphatische, araliphatische, aromatische und heterocyclische Polyisocyanate eingesetzt, wie sie z.B. von W. Siefken in Justus Liebigs Annalen der Chemie, 562, Seiten 75 bis 136, beschrieben werden, beispielsweise solche der Formel (V)

$$Q(NCO)_n \qquad (V)$$

in der

n = 2 - 4, vorzugsweise 2 -3,
und

Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7 - 8, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise werden als Komponente B mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt.

Ganz besonders bevorzugt wird als Komponente B eine Diphenylmethandiisocyanat-Mischung eingesetzt, bestehend aus

a) 45 bis 90 Gew.-% 4,4'-Diphenylmethandiisocyanat und
b) 10 bis 55 Gew.-% 2,2'-Diphenylmethandiisocyanat und/oder 2,4'-Diphenylmethandiiso-cyanat und

c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer alternativen ganz besonders bevorzugten Ausführrungsform wird als Komponente B eine Diphenylmethandiisocyanat-Mischung eingesetzt, bestehend aus

a) 35 bis 45 Gew.-% 4,4'-Diphenylmethandiisocyanat und
b) 1 bis 5 Gew.-% 2,2'-Diphenylmethandiisocyanat und/oder 2,4'-Diphenylmethandiiso-cyanat und
c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

Durchführung des Verfahrens zur Herstellung von Polyurethanschaumstoffen:

Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die PUR-Schaumstoffe können als Form- oder auch als Blockschaumstoffe hergestellt werden.

Die Formschaumstoffe können heiß- oder auch kalthärtend hergestellt werden.

Gegenstand der Erfindung sind daher ein Verfahren zur Herstellung der Polyurethanschaumstoffe, die nach diesem Verfahren hergestellten Polyurethanschaumstoffe und deren Verwendung zur Herstellung von Formteilen oder Blockware, sowie die Formteile bzw. die Blockware selbst.

Die nach der Erfindung erhältlichen Polyurethanschaumstoffe finden beispielsweise folgende Anwendung: Möbelpolsterungen, Textileinlagen, Matratzen, Automobilsitze, Kopfstützen, Armlehnen, Schwämme und Bauelemente, sowie Sitz- und Armaturverkleidungen , und weisen Kennzahlen von 70 bis 130, bevorzugt 80 bis 120 und Raumgewichte von 4 bis 600 kg/m$^3$, bevorzugt 60 bis 120 kg/m$^3$ (Weichschaum) bzw. bevorzugt 15 bis 55 kg/m$^3$ (Halbhartschaum) auf.

Die Kennzahl (Isocyanat Index) gibt das prozentuale Verhältnis der tatsächlich eingesetzten Isocyanat-Menge zur stöchiometrischen, d.h. berechneten Isocyanat-Gruppen (NCO)-Menge an:

$$\text{Kennzahl} = [(\text{Isocyanat-Menge eingesetzt}) : (\text{Isocyanat-Menge berechnet})] \bullet 100 \qquad (\text{VI})$$

In einer ersten Ausführungsform betrifft die Erfindung ein Verfahren zur Herstellung von Polyurethanen durch Umsetzung von gegenüber Isocyanaten reaktionsfähigen Wasserstoffatomen aufweisenden Verbindungen mit Di- und/oder Polyisocyanaten in Gegenwart von einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_mY^{m+} \qquad (IV),$$

wobei

- X für $NR^6R^7$, $OR^8$, $CONR^9R^{10}$ oder $COOR^{11}$,
- $R^1$ bis $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen.

In einer zweiten Ausführungsform betrifft die Erfindung ein Verfahren zur Herstellung von Polyurethanen, bevorzugt Polyurethanschaumstoffen, bei dem

A1 gegenüber Isocyanaten reaktionsfähige Wasserstoffatome aufweisende Verbindungen mit einer OH-Zahl gemäß DIN 53240 Datumvon $\geq$ 15 bis < 260 mg KOH/g,

A2 gegebenenfalls gegenüber Isocyanaten reaktionsfähige Wasserstoffatome aufweisende Verbindungen mit einer OH-Zahl gemäß DIN 53240 Datumvon $\geq$ 260 bis < 4000 mg KOH/g,

A3 Wasser und/oder physikalische Treibmittel,

A4 ggf. Hilfs- und Zusatzstoffe wie

> a) Katalysatoren,
> b) oberflächenaktive Zusatzstoffe,
> c) Pigmente und/oder Flammschutzmittel

A5 eine oder mehrere Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$ bis $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen,

und
B Di- und/oder Polyisocyanate
miteinander umgesetzt werden.

In einer dritten Ausführungsform der Erfindung betrifft die Erfindung ein Verfahren gemäß Ausführungsform 1 oder 2, wobei
die Einsatzmenge der Verbindungen (I) bis (IV), bezogen auf 1 kg der gegenüber Isocyanaten reaktionsfähigen Wasserstoffatomen aufweisenden Verbindungen und der Di- und/oder Polyisocyanate 1 bis 100 g, bevorzugt 5 bis 50 g beträgt (Anspruch 1), bzw. die Einsatzmenge der Komponente A5, bezogen auf 1 kg der Komponenten A1 und B, 1 bis 100 g, bevorzugt 5 bis 50 g beträgt (Anspruch 2).

In einer vierten Ausführungsform der Erfindung betrifft die Erfindung ein Verfahren zur Herstellung von Polyurethanen, bevorzugt Polyurethanschaumstoffen gemäß Ausführungsform 2 oder 3 bei dem

A1 75 bis 99,0 Gew.-Teile (bezogen auf die Summe der Gew.-Teile der Komponenten A1 bis A4) gegenüber Isocyantanen reaktionsfähigen Wasserstoffatomen aufweisenden Verbindungen mit einer OH-Zahl gemäß DIN 53240 von $\geq$ 15 bis < 260 mg KOH/g,

A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 24,5 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

> a) Katalysatoren,
> b) oberflächenaktive Zusatzstoffe,
> c) Pigmente und/oder Flammschutzmittel,

A5 1 bis 100 g pro kg der Komponenten A1 und B, bevorzugt 5 bis 50 g pro kg der Komponenten A1 und B einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$ bis $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen,

und

B Di- oder Polyisocyanaten, miteinander umgesetzt werden, wobei alle Gewichtsteilangaben der Komponenten A1 bis A4 so normiert sind, dass die Summe der Gewichtsteile der Komponenten A1+A2+A3+A4 in der Zusammensetzung 100 ergeben.

In einer fünften Ausführungsform der Erfindung betrifft die Erfindung ein Verfahren zur Herstellung von Polyurethanen, bevorzugt Polyurethanschaumstoffen gemäß Ausführungsform 2 oder 3 bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 15 bis < 260 mg KOH/g,

A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 25 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 1 bis 100 g pro kg der Komponenten A1 und B, bevorzugt 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$ bis $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen,

und

B Di- oder Polyisocyanaten,

miteinander umgesetzt werden,

wobei alle Gewichtsteilangaben der Komponenten A1 bis A4 so normiert sind, dass die Summe der Gewichtsteile der Komponenten A1+A2+A3+A4 in der Zusammensetzung 100 ergeben.

In einer sechsten Ausführungsform der Erfindung betrifft die Erfindung die Verwendung einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$ bis $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen,

in Polyurethanzusammensetzungen oder in Verfahren zur Herstellung von Polyurethanen, bevorzugt Polyurethanschaumstoffen, zur Erniedrigung der Formaldehydemission der daraus resultierenden Polyurethane, bzw. Polyurethanschaumstoffe.

In einer siebten Ausführungsform der Erfindung betrifft die Erfindung ein Verfahren oder eine Verwendung gemäß einer der Ausführungsformen 1 bis 6, wobei in den Verbindungen (I) bis (IV) $R^1$ bis $R^{12}$ jeweils unabhängig voneinander für H oder eine $C_1$-$C_6$ Alkylgruppe stehen.

In einer achten Ausführungsform der Erfindung betrifft die Erfindung ein Verfahren oder eine Verwendung gemäß Ausführungsform 7, wobei R1, R2, R4 und R5 unabhängig voneinander für H stehen.

In einer neunten Ausführungsform der Erfindung betrifft die Erfindung ein Verfahren gemäß einer der Ausführungsformen 1 bis 5, 7 oder 8, wobei als gegenüber Isocyanaten reaktionsfähige Wasserstoffatome aufweisenden Verbindungen (Komponente A1) mindestens zwei Hydroxylgruppen aufweisenden Polyether, gegebenenfalls in Mischung mit mindestens zwei Hydroxylgruppen aufweisenden Polyestern eingesetzt werden.

In einer zehnten Ausführungsform der Erfindung betrifft die Erfindung ein Verfahren gemäß einer der Ausführungsformen 1 bis 5, 7 bis 9, wobei die Komponente, die aus gegenüber Isocyanaten reaktionsfähige Wasserstoffatome aufweisenden Verbindungen besteht (Komponente A1), mindestens 30 Gew.-% mindestens eines Polyoxyalkylen-Copolymers enthält, bestehend aus einem Starter, Propylenoxid und Ethylenoxid und einem Endblock aus Ethylenoxid, wobei das Gesamtgewicht der Endblöcke aus EO im Mittel 3 - 20 Gew.-%, bevorzugt 5-15, besonders bevorzugt 6 - 10 Gew.-% bezogen auf das gesamte Gewicht aller Polyoxyalkylen-Copolymere beträgt.

In einer elften Ausführungsform der Erfindung betrifft die Erfindung ein Verfahren gemäß einer der Ausführungsformen 1 bis 5 oder 7 bis 10, wobei als Di- und/oder Polyisocyanat-Komponente (Komponente B) eine Diphenylmethandiisocyanat-Mischung, bestehend aus

a) 45 bis 90 Gew.-% 4,4'-Diphenylmethandiisocyanat und

b) 10 bis 55 Gew.-% 2,2'-Diphenylmethandiisocyanat und/oder 2,4'-Diphenylmethandiiso-cyanat und

c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine,

verwendet wird.

In einer zwölften Ausführungsform der Erfindung betrifft die Erfindung ein Verfahren gemäß einer der Ausführungsformen 1 bis 5 oder 7 bis 10, wobei als Di- und/oder Polyisocyanat-Komponente (Komponente B) eine Diphenylmethandiisocyanat-Mischung, bestehend aus

a) 35 bis 45 Gew.-% 4,4'-Diphenylmethandiisocyanat und

b) 1 bis 5 Gew.-% 2,2'-Diphenylmethandiisocyanat und/oder 2,4'-Diphenylmethandiiso-cyanat und

c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine,

verwendet wird.

In einer dreizhnten Ausführungsform der Erfindung betrifft die Erfindung ein Verfahren zur Herstellung von Polyurethanen, bevorzugt Polyurethanschaumstoffen gemäß Ausführungsform 4, 9 oder 10 bei dem

A1 75 bis 99,0 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,

A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 24,5 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$\text{NC-CHR}^1\text{-CONR}^{12}\text{-X} \qquad (I),$$

$$\text{NC-CHR}^2\text{-CONR}^3\text{-Aryl} \qquad (II),$$

$$\text{NC-CHR}^4\text{-CO}_2\text{H} \qquad (III),$$

$$[\text{NC-CHR}^5\text{-CO}_2]_m\text{Y}^{m+} \qquad (IV),$$

wobei

- X für $\text{NR}^6\text{R}^7$, $\text{OR}^8$, $\text{CONR}^9\text{R}^{10}$ oder $\text{COOR}^{11}$,
- $\text{R}^1$ bis $\text{R}^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen,

und
B Di- oder Polyisocyanaten, miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben.

In einer vierzehnten Ausführungsform der Erfindung betrifft die Erfindung ein Verfahren zur Herstellung von Polyurethanen, bevorzugt Polyurethanschaumstoffen gemäß Ausführungsform 4, 9 oder 10 bei dem

A1 75 bis 99,0 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,

A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 24,5 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$ bis $R^{12}$ jeweils unabhängig voneinander für H oder eine $C_1$-$C_6$ Alkylgruppe,
- Y für ein ein- oder zweiwertiges Kation, und
- m für 1 oder 2 stehen,

und
B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben.

In einer fünfzehnten Ausführungsform der Erfindung betrifft die Erfindung ein Verfahren zur Herstellung von Polyurethanen, bevorzugt Polyurethanschaumstoffen gemäß Ausführungsform 4, 9 oder 10 bei dem

A1 75 bis 99,0 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von ≥ 20 bis ≤ 150 mg KOH/g,

A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von ≥ 260 bis < 4000 mg KOH/g,

A3 0,5 bis 24,5 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$, $R^2$, $R^4$ und $R^5$ jeweils unabhängig voneinander für H und $R^3$ und $R^6$ bis $R^{12}$ jeweils unabhängig voneinander für H oder eine $C_1$-$C_6$ Alkylgruppe,
- Y für ein ein- oder zweiwertiges Kation, und
- m für 1 oder 2 stehen,

und

B Di- oder Polyisocyanaten,

miteinander umgesetzt werden,

wobei alle Gewichtsteilangaben der Komponenten A1 bis A4 so normiert sind, dass die Summe der Gewichtsteile der Komponenten A1+A2+A3+A4 in der Zusammensetzung 100 ergeben.

In einer sechzehnten Ausführungsform der Erfindung betrifft die Erfindung ein Verfahren zur Herstellung von Polyurethanen, bevorzugt Polyurethanschaumstoffen gemäß Ausführungsform 4, 9 oder 10 bei dem

A1 75 bis 99,0 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,

A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 24,5 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$ bis $R^{12}$ jeweils unabhängig voneinander für H oder eine $C_1$-$C_6$ Alkylgruppe,
- Y für ein ein- oder zweiwertiges Kation, und
- m für 1 oder 2 stehen,

und

B Di- oder Polyisocyanaten,

miteinander umgesetzt werden,

wobei alle Gewichtsteilangaben der Komponenten A1 bis A4 so normiert sind, dass die Summe der Gewichtsteile der Komponenten A1+A2+A3+A4 in der Zusammensetzung 100 ergeben und als Komponente B eine Diphenylmethandiisocyanat-Mischung eingesetzt wird, bestehend aus

a) 45 bis 90 Gew.-% 4,4'-Diphenylmethandiisocyanat und
b) 10 bis 55 Gew.-% 2,2'-Diphenylmethandiisocyanat und/oder 2,4'-Diphenylmethandiiso-cyanat und
c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer siebzehnten Ausführungsform der Erfindung betrifft die Erfindung ein Verfahren zur Herstellung von Polyurethanen, bevorzugt Polyurethanschaumstoffen gemäß Ausführungsform 4, 9 oder 10 bei dem

A1 75 bis 99,0 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,

A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 24,5 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$ bis $R^{12}$ jeweils unabhängig voneinander für H oder eine $C_1$-$C_6$ Alkylgruppe,
- Y für ein ein- oder zweiwertiges Kation, und
- m für 1 oder 2 stehen,

und
B Di- oder Polyisocyanaten,
miteinander umgesetzt werden,

wobei alle Gewichtsteilangaben der Komponenten A1 bis A4 so normiert sind, dass die Summe der Gewichtsteile der Komponenten A1+A2+A3+A4 in der Zusammensetzung 100 ergeben und als Komponente B eine Diphenylmethandiisocyanat-Mischung eingesetzt wird, bestehend aus

a) 35 bis 45 Gew.-% 4,4'-Diphenylmethandiisocyanat und
b) 1 bis 5 Gew.-% 2,2'-Diphenylmethandiisocyanat und/oder 2,4'-Diphenylmethandiiso-cyanat und
c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer achtzehnten Ausführungsform der Erfindung betrifft die Erfindung ein Verfahren zur Herstellung von Polyurethanen, bevorzugt Polyurethanschaumstoffen gemäß Ausführungsform 4, 9 oder 10 bei dem

A1 75 bis 99,0 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,

A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 24,5 Gew.-Teile (bezogen auf die Summe der Gew.-Teile der Komponenten A1 bis A4) Wasser und/oder physikalische Treibmittel,
A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC-CHR^1-CONR^{12}-X \qquad (I),$$

$$NC-CHR^2-CONR^3-Aryl \qquad (II),$$

$$NC-CHR^4-CO_2H \qquad (III),$$

$$[NC-CHR^5-CO_2]_m Y^{m+} \qquad (IV),$$

wobei

- X für $NR^6R^7$, $OR^8$, $CONR^9R^{10}$ oder $COOR^{11}$,
- $R^1$, $R^2$, $R^4$ und $R^5$ jeweils unabhängig voneinander für H und $R^3$ und $R^6$ bis $R^{12}$ jeweils unabhängig voneinander für H oder eine $C_1$-$C_6$ Alkylgruppe,
- Y für ein ein- oder zweiwertiges Kation, und
- m für 1 oder 2 stehen,

und
B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben und als Komponente B eine Diphenylmethandiisocyanat-Mischung eingesetzt wird, bestehend aus

a) 45 bis 90 Gew.-% 4,4'-Diphenylmethandiisocyanat und
b) 10 bis 55 Gew.-% 2,2'-Diphenylmethandiisocyanat und/oder 2,4'-Diphenylmethandiiso-cyanat und
c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer neunzehnten Ausführungsform der Erfindung betrifft die Erfindung ein Verfahren zur Herstellung von Polyurethanen, bevorzugt Polyurethanschaumstoffen gemäß Ausführungsform 4, 9 oder 10 bei dem

A1 75 bis 99,0 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,
A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,
A3 0,5 bis 24,5 Gew.-Teile (bezogen auf die Summe der Gew.-Teile der Komponenten A1 bis A4) Wasser und/oder physikalische Treibmittel,
A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC-CHR^1-CONR^{12}-X \qquad (I),$$

$$NC-CHR^2-CONR^3-Aryl \qquad (II),$$

$$NC-CHR^4-CO_2H \qquad (III),$$

$$[NC-CHR^5-CO_2]_m Y^{m+} \qquad (IV),$$

wobei

- X für $NR^6R^7$, $OR^8$, $CONR^9R^{10}$ oder $COOR^{11}$,
- $R^1$, $R^2$, $R^4$ und $R^5$ jeweils unabhängig voneinander für H und $R^3$ und $R^6$ bis $R^{12}$ jeweils unabhängig voneinander für H oder eine $C_1$-$C_6$ Alkylgruppe,
- Y für ein ein- oder zweiwertiges Kation, und
- m für 1 oder 2 stehen,

und
B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben und als Komponente B eine Diphenylmethandiisocyanat-Mischung eingesetzt wird, bestehend aus

a) 35 bis 45 Gew.-% 4,4'-Diphenylmethandiisocyanat und
b) 1 bis 5 Gew.-% 2,2'-Diphenylmethandiisocyanat und/oder 2,4'-Diphenylmethandiiso-cyanat und
c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer zwanzigsten Ausführungsform der Erfindung betrifft die Erfindung ein Verfahren zur Herstellung von Polyurethanen, bevorzugt Polyurethanschaumstoffen gemäß Ausführungsform 5, 9 oder 10 bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,
A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,
A3 0,5 bis 25 Gew.-Teile (bezogen auf die Summe der Gew.-Teile der Komponenten A1 bis A4) Wasser und/oder physikalische Treibmittel,
A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC-CHR^1-CONR^{12}-X \qquad (I),$$

$$NC-CHR^2-CONR^3-Aryl \qquad (II),$$

$$NC-CHR^4-CO_2H \qquad (III),$$

$$[NC-CHR^5-CO_2]_m Y^{m+} \qquad (IV),$$

wobei

- X für $NR^6R^7$, $OR^8$, $CONR^9R^{10}$ oder $COOR^{11}$,
- $R^1$ bis $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen,

und

B Di- oder Polyisocyanaten,

miteinander umgesetzt werden,

wobei alle Gewichtsteilangaben der Komponenten A1 bis A4 so normiert sind, dass die Summe der Gewichtsteile der Komponenten A1+A2+A3+A4 in der Zusammensetzung 100 ergeben.

In einer einundzwanzigsten Ausführungsform der Erfindung betrifft die Erfindung ein Verfahren zur Herstellung von Polyurethanen, bevorzugt Polyurethanschaumstoffen gemäß Ausführungsform 5, 9 oder 10 bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,

A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 25 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$ bis $R^{12}$ jeweils unabhängig voneinander für H oder jeweils unabhängig voneinander für H oder eine $C_1$-$C_6$ Alkylgruppe,
- Y für ein ein- oder zweiwertiges Kation, und
- m für 1 oder 2 stehen,

und

B Di- oder Polyisocyanaten,

miteinander umgesetzt werden,

wobei alle Gewichtsteilangaben der Komponenten A1 bis A4 so normiert sind, dass die Summe der Gewichtsteile der Komponenten A1+A2+A3+A4 in der Zusammensetzung 100 ergeben.

In einer zweiundzwanzigsten Ausführungsform der Erfindung betrifft die Erfindung ein Verfahren zur Herstellung von Polyurethanen, bevorzugt Polyurethanschaumstoffen gemäß Ausführungsform 5, 9 oder 10 bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,

A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 25 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$, $R^2$, $R^4$ und $R^5$ jeweils unabhängig voneinander für H und $R^3$ und $R^6$ bis $R^{12}$ jeweils unabhängig voneinander für H oder eine $C_1$-$C_6$ Alkylgruppe,
- Y für ein ein- oder zweiwertiges Kation, und
- m für 1 oder 2 stehen,

und
B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben.

In einer dreiundzwanzigsten Ausführungsform der Erfindung betrifft die Erfindung ein Verfahren zur Herstellung von Polyurethanen, bevorzugt Polyurethanschaumstoffen gemäß Ausführungsform 5, 9 oder 10 bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,

A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 25 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$ bis $R^{12}$ jeweils unabhängig voneinander für H oder jeweils unabhängig voneinander für H oder eine $C_1$-$C_6$ Alkylgruppe,
- Y für ein ein- oder zweiwertiges Kation, und
- m für 1 oder 2 stehen,

und
B Di- oder Polyisocyanaten,
miteinander umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben und als Komponente B eine Diphenylmethandiisocyanat-Mischung eingesetzt wird, bestehend aus

a) 45 bis 90 Gew.-% 4,4'-Diphenylmethandiisocyanat und
b) 10 bis 55 Gew.-% 2,2'-Diphenylmethandiisocyanat und/oder 2,4'-Diphenylmethandiiso-cyanat und
c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer vierundzwanzigsten Ausführungsform der Erfindung betrifft die Erfindung ein Verfahren zur Herstellung von Polyurethanen, bevorzugt Polyurethanschaumstoffen gemäß Ausführungsform 5, 9 oder 10 bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,
A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,
A3 0,5 bis 25 Gew.-Teile (bezogen auf die Summe der Gew.-Teile der Komponenten A1 bis A4) Wasser und/oder physikalische Treibmittel,
A4 0,5 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$ bis $R^{12}$ jeweils unabhängig voneinander für H oder jeweils unabhängig voneinander für H oder eine $C_1$-$C_6$ Alkylgruppe,
- Y für ein ein- oder zweiwertiges Kation, und
- m für 1 oder 2 stehen,

und

B Di- oder Polyisocyanaten, miteinander umgesetzt werden,

wobei alle Gewichtsteilangaben der Komponenten A1 bis A4 so normiert sind, dass die Summe der Gewichtsteile der Komponenten A1+A2+A3+A4 in der Zusammensetzung 100 ergeben und als Komponente B eine Diphenylmethandiisocyanat-Mischung eingesetzt wird, bestehend aus

a) 35 bis 45 Gew.-% 4,4'-Diphenylmethandiisocyanat und

b) 1 bis 5 Gew.-% 2,2'-Diphenylmethandiisocyanat und/oder 2,4'-Diphenylmethandiiso-cyanat und

c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer fünfundzwanzigsten Ausführungsform der Erfindung betrifft die Erfindung ein Verfahren zur Herstellung von Polyurethanen, bevorzugt Polyurethanschaumstoffen gemäß Ausführungsform 5, 9 oder 10 bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,

A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 25 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

a) Katalysatoren,

b) oberflächenaktive Zusatzstoffe,

c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$, $R^2$, $R^4$ und $R^5$ jeweils unabhängig voneinander für H und $R^3$ und $R^6$ bis $R^{12}$ jeweils unabhängig voneinander für H oder eine $C_1$-$C_6$ Alkylgruppe,
- Y für ein ein- oder zweiwertiges Kation, und
- m für 1 oder 2 stehen,

und

B Di- oder Polyisocyanaten,

miteinander umgesetzt werden,

wobei alle Gewichtsteilangaben der Komponenten A1 bis A4 so normiert sind, dass die Summe der Gewichtsteile der Komponenten A1+A2+A3+A4 in der Zusammensetzung 100 ergeben und als Komponente B eine Diphenylmethandiisocyanat-Mischung eingesetzt wird, bestehend aus

a) 45 bis 90 Gew.-% 4,4'-Diphenylmethandiisocyanat und

b) 10 bis 55 Gew.-% 2,2'-Diphenylmethandiisocyanat und/oder 2,4'-Diphenylmethandiiso-cyanat und

c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer sechsundzwanzigsten Ausführungsform der Erfindung betrifft die Erfindung ein Verfahren zur Herstellung von Polyurethanen, bevorzugt Polyurethanschaumstoffen gemäß Ausführungsform 5, 9 oder 10 bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 20 bis $\leq$ 150 mg KOH/g,

A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 25 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

a) Katalysatoren,

b) oberflächenaktive Zusatzstoffe,

c) Pigmente und/oder Flammschutzmittel,

A5 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$, $R^2$, $R^4$ und $R^5$ jeweils unabhängig voneinander für H und $R^3$ und $R^6$ bis $R^{12}$ jeweils unabhängig voneinander für H oder eine $C_1$-$C_6$ Alkylgruppe,
- Y für ein ein- oder zweiwertiges Kation, und
- m für 1 oder 2 stehen,

und

B Di- oder Polyisocyanaten,

miteinander umgesetzt werden,

wobei alle Gewichtsteilangaben der Komponenten A1 bis A4 so normiert sind, dass die Summe der Gewichtsteile der Komponenten A1+A2+A3+A4 in der Zusammensetzung 100 ergeben und als Komponente B eine Diphenylmethandiisocyanat-Mischung eingesetzt wird, bestehend aus

a) 35 bis 45 Gew.-% 4,4'-Diphenylmethandiisocyanat und

b) 1 bis 5 Gew.-% 2,2'-Diphenylmethandiisocyanat und/oder 2,4'-Diphenylmethandiiso-cyanat und

c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer siebenundzwanzigsten Ausführungsform der Erfindung betrifft die Erfindung Polyurethane, bzw. Polyurethanschaumstoffe, erhältlich nach einem Verfahren gemäß einer der Ausführungsformen 1 bis 5 oder 7 bis 26.

In einer achtundzwanzigsten Ausführungsform der Erfindung betrifft die Erfindung Polyurethane, bzw. Polyurethanschaumstoffe gemäß Ausführungsform 27 mit einem Raumgewicht von 4 bis 600 kg/m$^3$ (Polyurethanweichschaum, bzw. Halbhartschaum), bevorzugt 60 bis 120 kg/m$^3$ (Polyurethanweichschaum), bzw. bevorzugt 15 bis 55 kg/m$^3$ (Halbhartschaum)

In einer neunundzwanzigsten Ausführungsform der Erfindung betrifft die Erfindung Polyurethane, bzw. Polyurethanschaumstoffe gemäß Ausführungsform 27 oder 28 zur Herstellung von Möbelpolsterungen, Textileinlagen, Matratzen, Automobilsitzen, Kopfstützen, Armlehnen, Schwämmen, Dachhimmeln, Türseitenverkleidungen, Sitzauflagen oder Bauelementen.

**Beispiele**

Prüfmethoden:

Die Stauchhärte, Dämpfung und die Rohdichte der Schaumstoffe wurden in Anlehnung an DIN EN ISO 3386-1 in Aufschäumrichtung bestimmt. Die Probenkörper hatten ein Volumen von 5*5*5 cm$^3$. Eine Vorkraft von 2 kPa wurde dabei eingestellt. Die Vorschubgeschwindigkeit betrug 50 mm/min.

Die Hydroxylzahl wurde gemäß DIN 53240 bestimmt.

Die Offenzelligkeit wurde mit einem Gasverdrängungspyknometer vom Typ AccuPyc 1330 gemessen.

Als Glasübergang wird das Maximum des tan δ nach DIN EN ISO 6721-2 B (Torsionspendel -Verfahren) angegeben.

Bestimmung der Aldehyd-Emissionen:

VDA 275 ist eine standardisierte Testmethode des Verbandes Deutscher Automobilhersteller (VDA). Sie wird hier in der zum Zeitpunkt der Anmeldung gültigen Fassung verwendet.

a) Messmethode 1 (Flaschenmethode nach VDA 275):

In eine Glasflasche von einem Liter Volumen werden 50 Milliliter Wasser gegeben. Am Deckel wird eine Schaumstoffplatte der Größe 40*10*2 cm$^3$ frei hängend befestigt so dass der Schaumstoff nicht mit der wäßrigen Lösung am Boden der Flasche in Kontakt ist. Die Flasche wird verschlossen und 3 Stunden in einen Umlufttrockenschrank bei 60 °C gelagert. Man läßt die Flasche auf Raumtemperatur abkühlen, entnimmt den Schaumstoff. Ein Aliquot der wässrigen Lösung wird mit einer Lösung von 0,3 mmol/Liter Dinitrophenylhydrazin (DNPH) in 3 mM phosphorsaurem Acetonitril umgesetzt. Man analysiert die Zusammensetzung der wäßrigen Lösung per LC-MS/MS auf die Hydrazone der unten angegebenen Aldehyde. Zu jeder Schaumqualität werden drei Flaschen untersucht. Bei jedem Versuchslauf werden drei Flaschen ohne Schaumstoff mit untersucht. Der mittlere Blindwert wird von den Meßwerten abgezogen. Auf dieser Basis wird auf die Emission der jeweiligen Aldehyde pro Kilogramm Schaumstoff zurückgerechnet. Die Angabe erfolgt im mg Aldehyd pro kg Schaumstoff.

b) Messmethode 2 (modifizierte Flaschenmethode):

In eine Glasflasche von einem Liter Volumen werden 25 Milliliter Wasser und 25 Milliliter einer Lösung von 0,3 mmol/Liter Dinitrophenylhydrazin (DNPH) in 3 mM phosphorsaurem Acetonitril gegeben. Der Gehalt an DNPH beträgt 7,5 μmol pro Flasche. Am Deckel wird eine Schaumstoffplatte der Größe 40*10*4 cm$^3$ frei hängend befestigt so dass der Schaumstoff nicht mit der wäßrigen Lösung am Boden der Flasche in Kontakt ist. Die Flasche wird verschlossen und 3 Stunden in einen Umlufttrockenschrank bei 65 °C gelagert. Man läßt die Flasche auf Raumtemperatur abkühlen, entnimmt den Schaumstoff und analysiert die Zusammensetzung der wäßrigen Lösung per LC-MS/MS auf die Hydrazone der unten angegebenen Aldehyde. Zu jeder Schaumqualität werden drei Flaschen untersucht. Bei jedem Versuchslauf werden drei Flaschen ohne Schaumstoff mit untersucht. Der mittlere Blindwert wird von den Meßwerten abgezogen. Auf dieser Basis wird auf die Emission der jeweiligen Aldehyde pro Kilogramm Schaumstoff zurückgerechnet. Die Angabe erfolgt im mg Aldehyd pro kg Schaumstoff.

## Beschreibung der Versuche

Die Herstellung der Polyurethanschaumstoffe erfolgt durch Mischen einer Polyolformulierung A und einer Isocyanatkomponente B.

Die angegebenen OH-Zahlen werden nach DIN 53240 in der zum Zeitpunkt der Anmeldung gültigen Fassung erhalten.

## Versuchsserie 1: Weichformschaum z. B. für Lärmabsorption

### Beschreibung der Rohstoffe

| | |
|---|---|
| A1-1: | Polyether-Gemisch aus einem Glyzerin-gestarteten Polyalkylenoxid mit einem Molgewicht von 4,8 kg/mol, einer OH-Zahl von 35 mg KOH/g, und einem Gehalt an Ethylenoxid von < 50 Gew.-% und einem Propylenglycol-gestarteten Polyalkylenoxid mit einem Molgewicht von 4 kg/mol und einer OH-Zahl von 28 mg KOH/g im Gewichtsverhältnis 55:45. |
| A2-1: | Triethanolamin |
| A3-1: | Wasser |
| A4-1: | Schwarzpaste Isopur N, Handelsprodukt der Firma |
| A4-2: | Schaumstabilisator Tegostab B8734 LF2, Handelsprodukt der Firma Evonik Nutrition & Care, Essen |
| A4-3: | Als Zellöffner genutztes Glyzerin-gestartetes Polyalkylenoxid mit einer OH-Zahl von 37 mg KOH/g und einem Gehalt an Ethylenoxid von ≥ 50 Gew.-% |
| A4-4: | Katalysator-Mischung aus Jeffcat® DPA (Handelsprodukt der Firma Huntsman) und Dabco® NE 300 (Handelsprodukt der Firma Air Products) im Verhältnis 6:1 (nach Gewicht) |
| A5-1: | Cyanessigsäure 67%-ig in DEG (Diethylenglycol) |
| B-1: | Gemisch aus MDI Isomeren und Homologen mit einer Dichte von 1,24 kg/l, einem Isocyanat-Gehalt von 323 g/kg und einer Viskosität von 0,05 Pa*s. Der Gehalt an 4,4'-MDI beträgt 55 Gew.-%. Die Summe aus 2,2'-MDI, 2,4'-MDI und 4,4'-MDI beträgt 70 Gew.-%. |

Polyolformulierung A

| | Vergleich 90V | Erfindungsgemäß 90A |
|---|---|---|
| Polyether-Gemisch (A1-1) | 91,7 | 87,8 |
| Zellöffner (A4-3) | 1,5 | 1,5 |
| Farbpaste (A4-1) | 0,2 | 0,2 |
| Schaumstabilisator (A4-2) | 0,8 | 0,7 |
| Vernetzer (A2-1) | 0,6 | 0,6 |
| Treibmittel (A3-1). | 3,8 | 3,7 |
| Katalysator (A4-4) | 1,4 | 2,6 |
| Cyanessigsäure 67%-ig in DEG (A5-1) | - | 2,9 |

### Herstellung der Schaumstoffe:

Als Kennzahl wird das Hundertfache des Verhältnisses von Isocyanat-Gruppen zu Isocyanat-reaktiven Gruppen bezeichnet. In den folgenden Versuchen werden immer Schaumstoffe miteinander verglichen, die unter Verwendung der gleichen Kennzahl hergestellt wurden. Es wurde in zwei Versuchsreihen eine Kennzahl unter 100 (Überschuß an Isocyanat-reaktiven Gruppen) und eine Kennzahl über 100 eingestellt.

| Kennzahl 90 | Einsatzmenge Polyolkomponente Gramm | Einsatzmenge Isocyanat Gramm | Einsatzmenge Isocyanat Gramm |
|---|---|---|---|
| Schaumstoff 90V | 100 | 59 | |

(fortgesetzt)

| Kennzahl 90 | Einsatzmenge Polyolkomponente Gramm | Einsatzmenge Isocyanat Gramm | Einsatzmenge Isocyanat Gramm |
|---|---|---|---|
| Schaumstoff 90A | 100 | | 61 |

| Kennzahl 105 | Einsatzmenge Polyolkomponente Gramm | Einsatzmenge Isocyanat Gramm | Einsatzmenge Isocyanat Gramm |
|---|---|---|---|
| Schaumstoff 105V | 100 | 69 | |
| Schaumstoff 105A | 100 | | 71 |

Zur Herstellung der Schaumstoffe wird die notwendige Menge an Polyol in einem Pappbecher mit Blechboden (Volumen: ca. 850ml) vorgelegt und mit einem Rührwerk (Fa. Pendraulik) mit Standardrührscheibe (d = 64 mm) bei 4200 U/min 45 Sekunden lang mit Luft beladen. Das Isocyanat / Isocyanatgemisch / Prepolymer wird in einen geeigneten Becher eingewogen und wieder entleert (Auslaufzeit: 3 s). Dieser, an den Innenwandungen noch benetzte Becher wird tariert und wieder mit der angegebenen Isocyanatmenge gefüllt. Das Isocyanat wird der Polyolformulierung zugesetzt (Auslaufzeit: 3s). Die Mischung wird mit einem Rührwerk (Fa. Pendraulik) für 5 Sekunden intensiv vermischt. Zu Beginn der Vermischung wird eine Stoppuhr gestartet, von welcher die charakteristischen Reaktionszeiten abgelesen werden. Ca. 93 Gramm des Reaktionsgemisches werden in eine 23°C warme mit Teflonfolie ausgekleidete Kastenform aus Aluminium mit 1,6 $dm^3$ Volumen gegossen. Die Form wird verschlossen und verriegelt. Nach sechs Minuten wird die Verriegelung geöffnet, entspannt und der Formendruck wird über die Aufdrückhöhe des Formendeckels durch das Formteil [mm] qualitativ beurteilt. Das entformte Schaumkissen wird bezüglich Ausreaktion sowie Haut- und Porenstruktur qualitativ beurteilt.

Die Reaktionskinetik wird an dem Rest des Reaktionsgemisches im Becher bestimmt. Die Startzeit ist erreicht, wenn ein Expandieren des Gemisches zu beobachten ist. Die Abbindezeit ist erreicht, wenn man mit einem Holzsiedestäbchen durch Auftupfen auf die Oberfläche des aufsteigenden Schaumes Fäden ziehen kann. Alternativ bilden sich Klümpchen am Holzsiedestäbchen.

Die Steigzeit ist erreicht, wenn der Schaum endgültig aufhört zu expandieren. Hierbei ist darauf zu achten, dass einige Systeme dazu neigen ein Stück abzusacken und dann noch einmal weiter steigen.

| Reaktionskinetik | | 90V Vergleich | 90A Erfindungsgemäß | 105V Vergleich |
|---|---|---|---|---|
| Startzeit | Sekunden | 10 | 8 | 10 |
| Abbindezeit | Sekunden | 50 | 55 | 52 |
| Steigzeit | Sekunden | 69 | 80 | 80 |

Konditionierung der Schaumstoffe:

Alle Schaumstoffe wurden nach der Herstellung 7 Tage in einem Abzug bei 20-23°C aufbewahrt. Ein Teil der Schaumstoffe wurden vor der Messung der Aldehydemissionen in Aluminiumfolie verpackt bei 90°C in einem Umluft-Trockenschrank gelagert. Diese Schaumstoffe werden als "gealtert" bezeichnet.

Mechanische Charakterisierung der Schaumstoffe

Die Stauchhärte wurde parallel zur Aufschäumrichtung bei 40% Stauchung gemessen. Eine Vorkraft von 2 kPa wurde dabei eingestellt. Die Vorschubgeschwindigkeit betrug 50 mm/min.

| Rohdichte | 90V Vergleich | 105V Vergleich | 90A Erfindung | |
|---|---|---|---|---|
| vor Alterung | 49 | 50 | 48 | $Kg/m^3$ |
| Nach 7 Tagen 110°C | 49 | 50 | 49 | $Kg/m^3$ |

(fortgesetzt)

| Stauchhärte bei 40% Stauchung | 90V | | 105 V | 90A | |
|---|---|---|---|---|---|
| | Vergleich | | Vergleich | Erfindung | |
| vor Alterung | 8,4 | | 11,7 | 8,7 | kPa |
| Nach 7 Tagen 110°C | 8,2 | | 11,7 | 8,6 | kPa |
| Dämpfung bei 40% Stauchung | 90V | | 105 V | 90A | |
| | Vergleich | | Vergleich | Erfindung | |
| vor Alterung | 0,42 | | 0,47 | 0,38 | |
| Nach 7 Tagen 110°C | 0,41 | | 0,47 | 0,39 | |

Aldehyd-Emissionen

Messmethode 1 (Flaschenmethode nach VDA 275)

| VDA275 | | 90 V | 105 V | 90 A |
|---|---|---|---|---|
| | | Vergleich | Vergleich | Erfindung |
| Formaldehyd | mg/kg | 4,2 | 3,6 | 3,8 |

Man findet den bekannten Effekt, dass eine Anhebung der Kennzahl die Aldehydemissionen reduziert. Die erfindungsgemäßen Schaumstoffe zeigen bei gleicher Kennzahl mäßig bis deutlich reduzierte Aldehydemissionen

Testmethode 2 (modifizierte Flaschenmethode)

| Formaldehyd | | 90 V | 105V | 90 A |
|---|---|---|---|---|
| | | Vergleich | Vergleich | Erfindung |
| Vor Alterung | mg/kg | 7,0 | 6,1 | 5,3 |
| Nach 7 Tagen 90°C | mg/kg | 8,8 | 9,8 | 7,8 |

Die modifizierte Methode verstärkt die Sichtbarkeit von Formaldehyd. Überraschend führt die Alterung zu einer Umkehrung des zunächst positiven Effekts einer höheren Kennzahl.

Vor und nach Alterung hat der Zusatz von Cyanessigsäure einen positiven Effekt auf die Formaldehydemissionen.

**Versuchsserie 2: halbharter Blockschaum z. B. für Lärmabsorption**

(Abgrenzung zu EP 1674515)

Beschreibung der Rohstoffe

(A1/A2)-1: Polyether-Gemisch aus einem Glyzerin/Sorbitol-co-gestarteten Polyalkylenoxid mit einem Äquivalentgewicht von 1,8 kg/mol und einer OH-Zahl von 31 mg KOH/g, einem Glyzerin-gestarteten Polyalkylenoxid mit einem Äquivalentgewicht von 0,1 kg/mol und einer OH-Zahl von 560 mg KOH/g und einem Propylenglycolgestarteten Polyalkylenoxid mit einem Äquivalentgewicht von 0,2 kg/mol und einer OH-Zahl von 280 mg KOH/g in einem Gewichtsverhältnis 38:50:12.

A2-2: Glyzerin

A3-1: Wasser

A4-5: Polyether-Polydimethylsilicon-Schaumstabilisator

A4-6: Katalysator: Umsetzungsprodukt aus Ölsäure und Dimethylaminopropylamin (1:1 molar)

A5-2: Acethydrazid

A5-3:        Cyanacethydrazid

A5-4:        DHBH: Umsetzungsprodukt aus Hydrazinhydrat und cyclischem Propylencarbonat (1:2 molar)

A5-5:        CMPA: 2-Cyano-N-methyl-N-phenylacetamid

A5-6:        KCA: Kaliumcyanoacetat

B-2:        Gemisch aus MDI Isomeren und Homologen mit einer Dichte von 1,22 kg/l, einem Isocyanat-Gehalt von 322 g/kg und einer Viskosität von 0,05 Pa*s. Der Gehalt an 4,4'-MDI beträgt 47 Gew.-%. Die Summe aus 2,2'-MDI, 2,4'-MDI und 4,4'-MDI beträgt 70%.

| | Gewichts-% in der Polyolformulierung |
|---|---|
| Polyether-Gemisch (A1/A2)-1 | 82,0 |
| Polyether-Polydimethylsilicon-Schaumstabilisator A4-5 | 1,5 |
| Vernetzer A2-2 | 7,0 |
| Treibmittel A3-1 | 6,5 |
| Katalysator A4-6 | 3,0 |

Additive A5 in der Polyolformulierung:

| Typ | 90 V2 Vergleich | 90 V3 | 90 C Erfindungsgemäß | 90 D | 90 V4 Vergleich | 90 V5 | 90 E Erfindungsgemäß | 90 F |
|---|---|---|---|---|---|---|---|---|
| | $CH_3$-CO-NH-$NH_2$ | | NC-$CH_2$-CO-NH-CO-$NH_2$ | | DHBH | keiner | CMPA | KCA |
| | A5-2 | | A5-3 | | A5-4 | | A5-5 | A5-6 |
| Gehalt in g/kg | 7,1 | 7,1 | 7,7 | 7,1 | 7,7 | - | 7,7 | 7,7 |
| Gehalt in mmol/kg | 96 | 96 | 61 | 56 | 33 | - | 44 | 63 |
| Zugabe als | Lösung im Treibmittel | Lösung im Vernetzer | Feststoff | Suspension im Vernetzer | flüssig | | Feststoff | Lösung im Treibmittel |

Der Gehalt ist in Gewichts-% angegeben. DHBH ist das Umsetzungsprodukt aus Hydrazinhydrat und cyclischem Propylencarbonat (1:2 molar). KCA ist Kaliumcyanoacetat $K^+[NC-CH_2-CO_2]^-$. CMPA ist 2-Cyano-N-methyl-N-phenyla-cetamid $NC-CH_2-CO-N(CH_3)(C_6H_5)$

Alle Schaumstoffe werden bei einer Kennzahl von 90 hergestellt.

Mechanische Charakterisierung der Schaumstoffe

| | | 90 V2 Vergleich | 90 V3 | 90 B Erfindungsgemäß | 90 C | 90 V4 Vergleich | 90 V5 | 90D Erfindungsgemäß | 90 E |
|---|---|---|---|---|---|---|---|---|---|
| Dichte | $Kg/m^3$ | 26 | 24 | 24 | 25 | 24 | 21 | 27 | 22 |
| E | | 6,6% | 6,1% | 7,0% | 7,4% | 5,2% | 5,4% | 5,3% | 3,2% |
| Modul | kPa | 103 | 91 | 112 | 122 | 112 | 94 | 122 | 79 |
| Maximale Kraft | kPa | 82 | 79 | 93 | 101 | 92 | 82 | 124 | |

Die Stauchhärte wurde parallel zur Aufschäumrichtung bei 10% Stauchung gemessen.

Die erfindungsgemäßen Beispiele zeigen eine 20% höhere Härte bei etwas besserer Elastizität im Vergleich zur Nutzung von Acethydrazid. Dies ist bei der Nutzung als Kernlage in Sandwichbauteilen wie Dachhimmeln im Automobil vorteilhaft.

Die Offenzelligkeit wurde mit einem Gasverdrängungspyknometer vom Typ AccuPyc 1330 gemessen.

EP 3 336 115 A1

| | Vergleich | | Erfindungsgemäß | | Vergleich | | Erfindungsgemäß | |
|---|---|---|---|---|---|---|---|---|
| | 90 V2 | 90 V3 | 90 B | 90 C | 90 V4 | 90 V5 | 90 D | 90 E |
| Mittelwert | 88% | 89% | 90% | 92% | 89% | 87% | 88% | 90% |

Die erfindungsgemäßen Beispiele zeigen eine etwas höhere Offenzelligkeit im Vergleich zur Nutzung von Acethydrazid. Dies ist für die Nutzung in schallabsorbierenden Anwendungen vorteilhaft.

Emissionen nach Testmethode 2 (modifizierte Flaschenmethode)

| | | Vergleich | | Erfindungsgemäß | | Vergleich | | Erfindungsgemäß | |
|---|---|---|---|---|---|---|---|---|---|
| | | 90 V2 | 90 V3 | 90 B | 90 C | 90 V4 | 90 V5 | 90 D | 90 E |
| Formaldehyd | mg/kg | 3,7 | 3,6 | 0,7 | 0,3 | 4,8 | 4,4 | 2,2 | 1,3 |
| Abweichung gegen Standard | | -16% | -18% | -84% | -93% | | | -50% | -70% |
| $\Delta$FA/ Additiv | mmol/ mol | -7 | -8 | -61 | -73 | | | -49 | -49 |

Die Ergebnisse bestätigen die Literatur: Acethydrazid ist grundsätzlich geeignet ist, die Formaldehydemissionen aus Schaumstoffen zu reduzieren. Cyanoacetylharnstoff und andere Derivate der Cyanessigsäure sind jedoch erheblich wirksamer.

In den Experimenten 90 D und 90 E wurden die Acetaldehydemissionen von 0,6 mg/kg (Vergleich 90V5) auf 0,5 bzw. 0,3 mg/kg gesenkt.

**Versuchsserie 3: halbharter Blockschaum z. B. für Dachhimmel**

(Abgrenzung zu EP2138520)

Beschreibung der Rohstoffe

(A1/A2)-2: Polyether-Gemisch aus einem Glyzerin/Sorbitol-cogestarteten Polyalkylenoxid mit einem Äquivalentgewicht von 1,8 kg/mol und einer OH-Zahl von 31 mg KOH/g, einem Glyzerin-gestarteten Polyalkylenoxid mit einem Äquivalentgewicht von 0,1 kg/mol einer OH-Zahl von 560 mg KOH/g und einem Propylenglycol-gestarteten Polyalkylenoxid mit einem Äquivalentgewicht von 0,2 kg/mol und einer OH-Zahl von 280 mg KOH/g im Gewichtsverhältnis 39:49:12.

A2-2: Glyzerin

A3-1: Wasser

A4-5: Silicon-Schaumstabilisator

A4-6: Reaktionsprodukt aus Ölsäure und Dimethylaminopropylamin (1:1 molar)

A5-3: Cyanacethydrazid

A5-7: Cyanacetamid

B2-2: Gemisch aus MDI Isomeren und Homologen mit einer Dichte von 1,22 kg/Liter, einem Isocyanat-Gehalt von 322 g/kg und einer Viskosität von 0,05 Pa*s. Der Gehalt an 4,4'-MDI beträgt 47 Gew.-%. Die Summe aus 2,2'-MDI, 2,4'-MDI und 4,4'-MDI beträgt 70%.

| | Gewichts-% in der Polyolformulierung |
|---|---|
| Polyether-Gemisch (A1/A2)-2 | 82,75 |
| Silicon-Schaumstabilisator A4-5 | 0,75 |
| Vernetzer A2-2 | 7,00 |
| Treibmittel A3-1 | 6,50 |

(fortgesetzt)

| | Gewichts-% in der Polyolformulierung |
|---|---|
| Katalysator A4-6 | 3,00 |

Cyanacetamid ist als Zellöffner bekannt. Von daher war nicht überraschend, dass Schäume, die Cyanacetamid enthielten, instabil waren und in einem Fall kollabierten. Im Falle der Schaumstoffe 80 V2, 90 V6 und 100 V2 wurde der Treibmittelgehalt um 0,5 Gewichtsteile angehoben und es wurden 1,5 Gewichtsteile Jeffcat DPA zugegeben, um eine annähernd vergleichbare Rohdichte zu erhalten.

Einsatzmengen der Additive A5:

In den Vergleichsversuchen 80 V1, 90 V6, 110 V1 und 110 V1 wurde kein Additiv eingesetzt.

| | 80 V2 | 90 V7 | 110 V2 | 80 A | 90 F | 100 A | 110 A |
|---|---|---|---|---|---|---|---|
| Additiv | Cyanacetamid (Vergleich) | | | Cyanacethydrazid (erfindungsgemäß) | | | |
| | A5-7 | | | A5-3 | | | |
| g / kg Schaumstoff | 8,3 | 7,7 | 7,2 | 8,0 | 7,4 | 6,9 | 6,5 |
| mmol/ kg Schaumstoff | 98 | 92 | 86 | 80 | 75 | 70 | 66 |

Kinetische Charakterisierung der Schaumstoffe

| Startzeit (Sekunden) | | Kennzahl | 80 | 90 | 100 | 110 |
|---|---|---|---|---|---|---|
| | | Bezeichnung | 80 V1 | 90 V6 | 100 V1 | 110 V1 |
| Additiv | Keines | Vergleich | 35 | 27 | 25 | 43 |
| | | Bezeichnung | 80 V2 | 90 V7 | 100 V2 | |
| Additiv | Cyanacetamid | Vergleich | 22 | 24 | 23 | |
| | | Bezeichnung | 80 A | 90 F | 100 A | 110 A |
| Additiv | Cyanacethydrazid | Erfindung | 22 | 25 | 25 | 28 |
| Abbindezeit (Sekunden) | | Kennzahl | 80 | 90 | 100 | 110 |
| | | Bezeichnung | 80 V1 | 90 V6 | 100 V1 | 110 V1 |
| Additiv | Keines | Vergleich | 170 | 170 | 175 | 215 |
| | | Bezeichnung | 80 V2 | | 100 V2 | |
| Additiv | Cyanacetamid | Vergleich | 290 | | 255 | |
| | | Bezeichnung | 80 A | 90 F | 100 A | 110 A |
| Additiv | Cyanacethydrazid | Erfindung | 180 | 200 | 210 | 225 |
| Steigzeit (Sekunden) | | Kennzahl | 80 | 90 | 100 | 110 |
| | | Bezeichnung | 80 V1 | 90 V6 | 100 V1 | 110 V1 |
| Additiv | Keines | Vergleich | 225 | 267 | 285 | 277 |
| | | Bezeichnung | 80 V2 | 90 V7 | 100 V2 | |
| Additiv | Cyanacetamid | Vergleich | 330 | 275 | 300 | |
| | | Bezeichnung | 80 A | 90 F | 100 A | 110 A |
| Additiv | Cyanacethydrazid | Erfindung | 246 | 250 | 255 | 305 |

Der Versuch, Cyanacethydrazid als Additiv einzusetzen, führt bei Kennzahl 100 zum Schaumkollaps. Der Versuch mit Kennzahl 110 wurde nicht durchgeführt.

Mechanische Charakterisierung der Schaumstoffe

| Kernrohdichte in kg/m$^3$ | Kennzahl | 80 | 90 | 100 | 110 |
|---|---|---|---|---|---|

(fortgesetzt)

| Vor Alterung | Bezeichnung | 80 V1 | 90 V6 | 100 V1 | 110 V1 |
|---|---|---|---|---|---|
| Additiv Keines | Vergleich | 25 | 28 | 32 | 32 |
|  | Bezeichnung | 80 V2 | 90 V7 | 100 V2 |  |
| Additiv Cyanacetamid | Vergleich | 31 | 31 | Kollabiert |  |
|  | Bezeichnung | 80 A | 90 F | 100 A | 110 A |
| Additiv Cyanacethydrazid | Erfindung | 26 | 30 | 30 | 29 |
| Kernrohdichte in kg/m$^3$ | Kennzahl | 80 | 90 | 100 | 110 |
| Nach 7 Tagen bei 90°C | Bezeichnung | 80 V1 | 90 V6 | 100 V1 | 110 V1 |
| Additiv Keines | Vergleich | 28 | 28 | 29 | 29 |
|  | Bezeichnung | 80 V2 | 90 V7 | 100 V2 |  |
| Additiv Cyanacetamid | Vergleich | 28 | 30 | Kollabiert |  |
|  | Bezeichnung | 80 A | 90 F | 100 A | 110 A |
| Additiv Cyanacethydrazid | Erfindung | 25 | 28 | 28 | 31 |
| Druck-E-Modul in MPa | Kennzahl | 80 | 90 | 100 | 110 |
|  | Bezeichnung | 80 V1 | 90 V6 | 100 V1 | 110 V1 |
| Additiv Keines | Vergleich | 0,11 | 0,13 | 0,17 | 0,17 |
|  | Bezeichnung | 80 V2 | 90 V7 | 100 V2 |  |
| Additiv Cyanacetamid | Vergleich | 0,14 | 0,14 | Kollabiert |  |
|  | Bezeichnung | 80 A | 90 F | 100 A | 110 A |
| Additiv Cyanacethydrazid | Erfindung | 0,10 | 0,14 | 0,15 | 0,14 |
| Druck-E-Modul in MPa | Kennzahl | 80 | 90 | 100 | 110 |
| Nach 7 Tagen bei 90°C | Bezeichnung | 80 V1 | 90 V6 | 100 V1 | 110 V1 |
| Additiv Keines | Vergleich | 0,14 | 0,13 | 0,16 | 0,15 |
|  | Bezeichnung | 80 V2 | 90 V7 | 100 V2 |  |
| Additiv Cyanacetamid | Vergleich | 0,12 | 0,15 | Kollabiert |  |
|  | Bezeichnung | 80 A | 90 F | 100 A | 110 A |
| Additiv Cyanacethydrazid | Erfindung | 0,10 | 0,14 | 0,13 | 0,17 |
| Offenzelligkeit in % | Kennzahl | 80 | 90 | 100 | 110 |
| Gasverdrängungspyknometer AccuPyk 1330 | Bezeichnung | 80 V1 | 90 V6 | 100 V1 | 110 V1 |
| Additiv Keines | Vergleich | 47 | 60 | 66 | 69 |
|  | Bezeichnung | 80 V2 | 90 V7 | 100 V2 |  |
| Additiv Cyanacetamid | Vergleich | 81 | 88 | Kollabiert |  |
|  | Bezeichnung | 80 A | 90 F | 100 A | 110 A |
| Additiv Cyanacethydrazid | Erfindung | 60 | 52 | 47 | 43 |
| Glasübergang nach DSC in °C | Kennzahl | 80 | 90 | 100 | 110 |
|  | Bezeichnun g | 80 V1 | 90 V6 | 100 V1 | 110 V1 |
| Additiv Keines | Vergleich | 244 | 204 | 202 | 229 |
|  | Bezeichnun g | 80 V2 | 90 V7 | 100 V2 |  |
| Additiv Cyanacetamid | Vergleich | 187 | 173 | Kollabiert |  |
|  | Bezeichnun g | 80 A | 90 F | 100 A | 110 A |
| Additiv Cyanacethydrazid | Erfindung |  | 240 | 247 | 228 |

Formaldehydemissionen (alle Angaben in mg / kg Schaumstoff)

| Vor Alterung | Kennzahl | 80 | 90 | 100 | 110 |
|---|---|---|---|---|---|
| Testmethode 1 | Bezeichnung | 80 V1 | 90 V6 | 100 V1 | 110 V1 |
| Additiv Keines | Vergleich | 1,5 | 1,1 | 0,9 | 1,2 |
|  | Bezeichnung | 80 V2 | 90 V7 | 100 V2 |  |
| Additiv Cyanacetamid | Vergleich | 0,4 | 0,3 | kollabiert |  |

(fortgesetzt)

| | | 80 A | 90 F | 100 A | 110 A |
|---|---|---|---|---|---|
| | Bezeichnung | 80 A | 90 F | 100 A | 110 A |
| Additiv Cyanacethydrazid | Erfindung | 0,2 | 0,5 | 0,3 | 0,2 |
| Nach 7 Tagen bei 90°C | Kennzahl | 80 | 90 | 100 | 110 |
| Testmethode 1 | Bezeichnung | 80 V1 | 90 V6 | 100 V1 | 110 V1 |
| Additiv Keines | Vergleich | 3,6 | 3,2 | 3,4 | 3,2 |
| | Bezeichnung | 80 V2 | 90 V7 | 100 V2 | 110 V3 |
| Additiv Cyanacetamid | Vergleich | 1,6 | 2,5 | kollabiert | |
| | Bezeichnung | 80 A | 90 F | 100 A | 110 A |
| Additiv Cyanacethydrazid | Erfindung | 0,9 | 0,9 | 1,3 | 1,2 |
| Vor Alterung | Kennzahl | 80 | 90 | 100 | 110 |
| Testmethode 2 | Bezeichnung | 80 V1 | 90 V6 | 100 V1 | 110 V1 |
| Additiv Keines | Vergleich | 4,5 | 6,1 | 6,2 | 6,7 |
| | Bezeichnung | 80 V2 | 90 V7 | 100 V2 | |
| Additiv Cyanacetamid | Vergleich | 0,3 | 0,5 | kollabiert | |
| | Bezeichnung | 80 A | 90 F | 100 A | 110 A |
| Additiv Cyanacethydrazid | Erfindung | 0,5 | 0,8 | 0,7 | 0,6 |
| Nach 7 Tagen bei 90°C | Kennzahl | 80 | 90 | 100 | 110 |
| Testmethode 2 | Bezeichnung | 80 V1 | 90 V6 | 100 V1 | 110 V1 |
| Additiv Keines | Vergleich | 15,0 | 13,6 | 18,0 | 13,9 |
| | Bezeichnung | 80 V2 | 90 V7 | 100 V2 | |
| Additiv Cyanacetamid | Vergleich | 3,2 | 3,9 | kollabiert | |
| | Bezeichnung | 80 A | 90 F | 100 A | 110 A |
| Additiv Cyanacethydrazid | Erfindung | 3,0 | 3,0 | 3,0 | 4,3 |

Formaldehydminderung (alle Angaben in mmol Formaldehyd / mol Additiv)

| | | 80 | 90 | 100 | 110 |
|---|---|---|---|---|---|
| Vor Alterung, Testmethode 1 | Kennzahl | 80 | 90 | 100 | 110 |
| | Bezeichnung | 80 V2 | 90 V7 | 100 V2 | |
| Additiv Cyanacetamid | Vergleich | 11 | 9 | kollabiert | |
| | Bezeichnung | 80 A | 90 F | 100 A | 110 A |
| Additiv Cyanacethydrazid | Erfindung | 16 | 8 | 9 | 15 |
| Nach 7 Tagen bei 90°C | Kennzahl | 80 | 90 | 100 | 110 |
| Testmethode 1 | Bezeichnung | 80 V2 | 90 V7 | 100 V2 | 110 V3 |
| Additiv Cyanacetamid | Vergleich | 20 | 8 | kollabiert | |
| | Bezeichnung | 80 A | 90 F | 100 A | 110 A |
| Additiv Cyanacethydrazid | Erfindung | 34 | 31 | 30 | 30 |
| Vor Alterung Testmethode 2 | Kennzahl | 80 | 90 | 100 | 110 |
| | Bezeichnung | 80 V2 | 90 V7 | 100 V2 | |
| Additiv Cyanacetamid | Vergleich | 43 | 61 | kollabiert | |
| | Bezeichnung | 80 A | 90 F | 100 A | 110 A |
| Additiv Cyanacethydrazid | Erfindung | 50 | 71 | 79 | 92 |
| Nach 7 Tagen bei 90°C | Kennzahl | 80 | 90 | 100 | 110 |
| Testmethode 2 | Bezeichnung | 80 V2 | 90 V7 | 100 V2 | |
| Additiv Cyanacetamid | Vergleich | 120 | 105 | kollabiert | |
| | Bezeichnung | 80 A | 90 F | 100 A | 110 A |
| Additiv Cyanacethydrazid | Erfindung | 150 | 141 | 214 | 145 |

Die Ergebnisse bestätigen die Literatur: Cyanacetamid ist geeignet, Formaldehydemissionen zu reduzieren.

Es zeigt sich, dass Cyanacethydrazid nicht nur ebenfalls gut geeignet ist, Formaldehydemissionen zu reduzieren. Dies gilt insbesondere nach Alterung.

Die Nutzung von Cyanacethydrazid erlaubt auch, Schaumstoffe über einen breiteren Kennzahlbereich herzustellen. Dies ist für die industrielle Nutzung von großem Vorteil, weil Schaumstoffe leichter an Kundenbedürfnisse angepaßt werden können.

### Versuchsserie 4: Weichformschaum

(Abgrenzung zu EP2138520).

Beschreibung der Rohstoffe

A1-2:  Glyzerin-gestartetes Polyalkylenoxid mit einem Molgewicht von 6,1 kg/mol, einer OH-Zahl von 28 mg KOH/g und einem Gehalt an Ethylenoxid von < 50 Gew.-%.

A2-3:  Diethanolamin

A3-1:  Wasser

A4-2:  Schaumstabilisator Tegostab® B8734 LF2, Handelsprodukt der Firma Evonik Nutrition & Care, Essen

A4-3:  Glyzerin-gestartetes Polyalkylenoxid mit einer OH-Zahl von 37 mg KOH/g und einem Gehalt an Ethylenoxid von ≥ 50 Gew.-% (Zellöffner)

A4-7:  Katalysator-Mischung aus Jeffcat® ZR50 (Handelsprodukt der Firma Huntsman) und Dabco® NE 300 (Handelsprodukt der Firma Air Products) im Verhältnis 4:1 (nach Gewicht)

A5-3:  Cyanacethydrazid

A5-7:  Cyanacetamid

B1-3:  Gemisch aus MDI Isomeren und Homologen mit einer Dichte von 1,24 kg/Liter, einem Isocyanat-Gehalt von 325 g/kg und einer Viskosität von 0,03 Pa*s. Der Gehalt an 4,4'-MDI beträgt 60 Gew.-%. Die Summe aus 2,2'-MDI, 2,4'-MDI und 4,4'-MDI beträgt 83 Gew.-%.

|  | Vergleich | Vergleich | Erfindungsgemäß |  |
|---|---|---|---|---|
|  | 90V8 | 90V9 | 90G |  |
| Polyether A1-2 | 931 | 931 | 945 | g/kg |
| Zellöffner A4-3 | 19 | 19 | 19 | g/kg |
| Vernetzer A2-3 | 11 | 11 | 11 | g/kg |
| Treibmittel A3-1 | 33 | 33 | 33 | g/kg |
| Katalysator A4-7 | 5 | 5 | 5 | g/kg |
| Cyanessigsäureamid A5-7 | 0 | 1 | 0 | g/kg |
| Cyanessigsäurehydrazid A5-3 | 0 | 0 | 1 | g/kg |

Die beiden Komponenten A und B wurden mit einer Kennzahl von 100 zur Reaktion gebracht.

Die Einsatzmengen an Cyanacetamid A5-7 und Cyanacethydrazid A5-3 betragen 7,1 bzw. 6,0 mmol/kg Schaumstoff.

In für die Herstellung von Polyurethan-Weichformschaumstoffen im Kaltschaumschaumverfahren üblicher Verarbeitungsweise nach dem Einstufenverfahren werden die in den Beispielen aufgeführten Einsatzstoffe miteinander zur Reaktion gebracht. Das 24°C warme Reaktionsgemisch wird in eine auf 60°C geheizte und vorher mit einem Trennmittel (PURA E1429H NV (Chem-Trend)) bestrichene Metallform (9,7 dm$^3$ Volumen) eingebracht. Die Einsatzmenge wird entsprechend der angestrebten Rohdichte und Formenvolumen verwendet. Die Formteile wurden nach 4 Minuten entformt und aufgedrückt. Die Formteile wurden nach 4 Stunden in AluminiumVerbundfolie versiegelt.

Die Formaldehydemissionen wurden nach Methode 2 bestimmt.

|  | 90V8 Vergleich | 90V9 Vergleich | 90G Erfindungsgemäß |  |
|---|---|---|---|---|
| Formaldehyd | 3,0 | 1,8 | 1,5 | mg/kg |

(fortgesetzt)

| | 90V8 Vergleich | 90V9 Vergleich | 90G Erfindungsgemäß | |
|---|---|---|---|---|
| Differenz zum Schaustoff ohne Additiv | Referenz | 1,2 | 1,5 | mg/kg |
| Spezifische Reduktion | Referenz | 5,6 | 8,3 | mmol/mol |

Die Acetaldehydemissionen betragen 0,6 mg/kg ohne Additiv. Beide Additive drücken die Acetaldehydemissionen unter die Nachweisgrenze von 0,3 mg/kg.

Auch hier zeigt sich, daß Cyanessigsäureamid geeignet ist, die Emissionen von Formaldehyd zu reduzieren.

Auch hier wirkt Cyanessigsäurehydrazid noch besser.

**Patentansprüche**

1. Verfahren zur Herstellung von Polyurethanen durch Umsetzung von gegenüber Isocyanaten reaktionsfähigen Wasserstoffatomen aufweisenden Verbindungen mit Di- und/oder Polyisocyanaten in Gegenwart von einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$ bis $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen.

2. Verfahren zur Herstellung von Polyurethanen, bevorzugt Polyurethanschaumstoffen, bei dem

A1 gegenüber Isocyanaten reaktionsfähige Wasserstoffatome aufweisende Verbindungen mit einer OH-Zahl gemäß DIN 53240 von $\geq$ 15 bis < 260 mg KOH/g,

A2 gegebenenfalls gegenüber Isocyanaten reaktionsfähige Wasserstoffatome aufweisende Verbindungen mit einer OH-Zahl gemäß DIN 53240 von $\geq$ 260 bis < 4000 mg KOH/g,

A3 Wasser und/oder physikalische Treibmittel,

A4 ggf. Hilfs- und Zusatzstoffe wie

a) Katalysatoren,
b) oberflächenaktive Zusatzstoffe,
c) Pigmente und/oder Flammschutzmittel

A5 eine oder mehrere Verbindungen ausgewählt aus der Gruppe bestehend aus:

$$NC\text{-}CHR^1\text{-}CON\, R^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

  - X für $NR^6R^7$, $OR^8$, $CONR^9R^{10}$ oder $COOR^{11}$,
  - $R^1$ bis $R^{12}$ jeweils unabhängig voneinander für H, eine gegebenenfalls substituierte $C_1$-$C_8$ Alkylgruppe oder eine gegebenenfalls substituierte Arylgruppe,
  - Y für ein ein- oder zweiwertiges Kation, und
  - m für 1 oder 2 stehen,

und
B Di- und/oder Polyisocyanate
miteinander umgesetzt werden.

**3.** Verfahren gemäß Anspruch 1 oder 2, wobei

  - die Einsatzmenge der Verbindungen (I) bis (IV), bezogen auf 1 kg der gegenüber Isocyanaten reaktionsfähigen Wasserstoffatomen aufweisenden Verbindungen und der Di- und/oder Polyisocyanate 1 bis 100 g, bevorzugt 5 bis 50 g beträgt (Anspruch 1), bzw. die Einsatzmenge der Komponente A5, bezogen auf 1 kg der Komponenten A1 und B, 1 bis 100 g, bevorzugt 5 bis 50 g beträgt (Anspruch 2).

**4.** Verfahren zur Herstellung von Polyurethanen, bevorzugt Polyurethanschaumstoffen gemäß Anspruch 2 oder 3 bei dem

A1 75 bis 99,0 Gew.-Teile (bezogen auf die Summe der Gew.-Teile der Komponenten A1 bis A4) gegenüber Isocyantanen reaktionsfähigen Wasserstoffatomen aufweisenden Verbindungen mit einer OH-Zahl gemäß DIN 53240 von $\geq$ 15 bis < 260 mg KOH/g,
A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,
A3 0,5 bis 24,5 Gew.-Teile (bezogen auf die Summe der Gew.-Teile der Komponenten A1 bis A4) Wasser und/oder physikalische Treibmittel,
A4 0,5 bis 10 Gew.-Teile (bezogen auf die Summe der Gew.-Teile der Komponenten A1 bis A4) Hilfs- und Zusatzstoffe wie

  a) Katalysatoren,
  b) oberflächenaktive Zusatzstoffe,
  c) Pigmente und/oder Flammschutzmittel,

A5 1 bis 100 g pro kg der Komponenten A1 und B, bevorzugt 5 bis 50 g pro kg der Komponenten A1 und B einer oder mehrerer Verbindungen ausgewählt aus der Gruppe bestehend aus:

    $NC\text{-}CHR^1\text{-}CON\,R^{12}\text{-}X$        (I),

    $NC\text{-}CHR^2\text{-}CONR^3\text{-}Aryl$      (II),

    $NC\text{-}CHR^4\text{-}CO_2H$       (III),

    $[NC\text{-}CHR^5\text{-}CO_2]_m\,Y^{m+}$     (IV),

wobei

  - X für $NR^6R^7$, $OR^8$, $CONR^9R^{10}$ oder $COOR^{11}$,
  - $R^1$ bis $R^{12}$ jeweils unabhängig voneinander für H, eine gegebenenfalls substituierte $C_1$-$C_8$ Alkylgruppe oder eine gegebenenfalls substituierte Arylgruppe,
  - Y für ein ein- oder zweiwertiges Kation, und
  - m für 1 oder 2 stehen,

und

B Di- oder Polyisocyanaten,

miteinander umgesetzt werden,

wobei alle Gewichtsteilangaben der Komponenten A1 bis A4 so normiert sind, dass die Summe der Gewichtsteile der Komponenten A1+A2+A3+A4 in der Zusammensetzung 100 ergeben.

**5.** Verfahren zur Herstellung von Polyurethanen, bevorzugt Polyurethanschaumstoffen gemäß Anspruch 2 oder 3 bei dem

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 15 bis < 260 mg KOH/g,

A2 20 bis 74 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 25 Gew.-Teile (bezogen auf die Summe der Gew.-Teile der Komponenten A1 bis A4) Wasser und/oder physikalische Treibmittel,

A4 0,5 bis 10 Gew.-Teile (bezogen auf die Summe der Gew.-Teile der Komponenten A1 bis A4) Hilfs- und Zusatzstoffe wie

a) Katalysatoren,

b) oberflächenaktive Zusatzstoffe,

c) Pigmente und/oder Flammschutzmittel,

A5 1 bis 100 g pro kg der Komponenten A1 und B, bevorzugt 5 bis 50 g pro kg der Komponenten A1 und B (Summer aus A1 und B) einer oder mehrerer Verbindungen ausgewählt aus der Gruppe bestehend aus:

$$NC\text{-}CHR^1\text{-}CONR^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$ bis $R^{12}$ jeweils unabhängig voneinander für H, eine gegebenenfalls substituierte $C_1\text{-}C_8$ Alkylgruppe oder eine gegebenenfalls substituierte Arylgruppe,
- Y für ein ein- oder zweiwertiges Kation, und
- m für 1 oder 2 stehen,

und

B Di- oder Polyisocyanaten,

miteinander umgesetzt werden,

wobei alle Gewichtsteilangaben der Komponenten A1 bis A4 so normiert sind, dass die Summe der Gewichtsteile der Komponenten A1+A2+A3+A4 in der Zusammensetzung 100 ergeben.

**6.** Verwendung einer oder mehrerer Verbindungen ausgewählt aus der Gruppe bestehend aus:

$$NC\text{-}CHR^1\text{-}CON\ R^{12}\text{-}X \qquad (I),$$

$$NC\text{-}CHR^2\text{-}CONR^3\text{-}Aryl \qquad (II),$$

$$NC\text{-}CHR^4\text{-}CO_2H \qquad (III),$$

$$[NC\text{-}CHR^5\text{-}CO_2]_m Y^{m+} \qquad (IV),$$

wobei

- X für $NR^6R^7$, $OR^8$, $CONR^9R^{10}$ oder $COOR^{11}$,
- $R^1$ bis $R^{12}$ jeweils unabhängig voneinander für H, eine gegebenenfalls substituierte $C_1$-$C_8$ Alkylgruppe oder eine gegebenenfalls substituierte Arylgruppe,
- Y für ein ein- oder zweiwertiges Kation, und
- m für 1 oder 2 stehen,

in Polyurethanzusammensetzungen oder in Verfahren zur Herstellung von Polyurethanen, bevorzugt Polyurethanschaumstoffen, zur Erniedrigung der Formaldehydemission der daraus resultierenden Polyurethane, bzw. Polyurethanschaumstoffe.

7. Verfahren oder Verwendung gemäß einem der Ansprüche 1 bis 6, wobei in den Verbindungen (I) bis (IV) R1 bis $R^{12}$ jeweils unabhängig voneinander für H oder eine $C_1$-$C_6$ Alkylgruppe stehen.

8. Verfahren oder Verwendung gemäß Anspruch 7, wobei R1, R2, R4 und R5 unabhängig voneinander für H stehen.

9. Verfahren gemäß einem der Ansprüche 1 bis 5, 7 oder 8, wobei als gegenüber Isocyanaten reaktionsfähige Wasserstoffatome aufweisenden Verbindungen (Komponente A1) mindestens zwei Hydroxylgruppen aufweisenden Polyether, gegebenenfalls in Mischung mit mindestens zwei Hydroxylgruppen aufweisenden Polyestern eingesetzt werden.

10. Verfahren gemäß einem der Ansprüche 1 bis 5, 7 bis 9, wobei die Komponente, die aus gegenüber Isocyanaten reaktionsfähige Wasserstoffatome aufweisenden Verbindungen besteht (Komponente A1), mindestens 30 Gew.-% mindestens eines Polyoxyalkylen-Copolymers enthält, bestehend aus einem Starter, Propylenoxid und Ethylenoxid und einem Endblock aus Ethylenoxid, wobei das Gesamtgewicht der Endblöcke aus Ethylenoxid im Mittel 3 - 20 Gew.-%, bevorzugt 5-15, besonders bevorzugt 6 - 10 Gew.-% bezogen auf das gesamte Gewicht aller Polyoxyalkylen-Copolymere beträgt.

11. Verfahren gemäß einem der Ansprüche 1 bis 5 oder 7 bis 10, wobei als Di- und/oder Polyisocyanat-Komponente (Komponente B) eine Diphenylmethandiisocyanat-Mischung, bestehend aus

a) 45 bis 90 Gew.-% 4,4'-Diphenylmethandiisocyanat und
b) 10 bis 55 Gew.-% 2,2'-Diphenylmethandiisocyanat und/oder 2,4'-Diphenylmethandiisocyanat und
c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine,

verwendet wird.

12. Verfahren gemäß einem der Ansprüche 1 bis 5 oder 7 bis 10, wobei als Di- und/oder Polyisocyanat-Komponente (Komponente B) eine Diphenylmethandiisocyanat-Mischung, bestehend aus

a) 35 bis 45 Gew.-% 4,4'-Diphenylmethandiisocyanat und
b) 1 bis 5 Gew.-% 2,2'-Diphenylmethandiisocyanat und/oder 2,4'-Diphenylmethandiisocyanat und
c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine,

verwendet wird.

13. Polyurethane, bzw. Polyurethanschaumstoffe erhältlich nach einem Verfahren gemäß einem der Ansprüche 1 bis 5 oder 7 bis 12.

14. Polyurethane, bzw. Polyurethanschaumstoffe gemäß Anspruch 13 mit einem Raumgewicht von 4 bis 600 kg/m³ (Polyurethanweichschaum bzw. Halbhartschaum), bevorzugt 60 bis 120 kg/m³ (Polyurethanweichschaum), bzw. bevorzugt 15 bis 55 kg/m³ (Halbhartschaum).

15. Verwendung der Polyurethane, bzw. Polyurethanschaumstoffe gemäß Anspruch 13 oder 14 zur Herstellung von Möbelpolsterungen, Textileinlagen, Matratzen, Automobilsitzen, Kopfstützen, Armlehnen, Schwämmen, Dachhimmeln, Türseitenverkleidungen, Sitzauflagen oder Bauelementen.

**Europäisches Patentamt**
**European Patent Office**
**Office européen des brevets**

## EUROPÄISCHER RECHERCHENBERICHT

**Nummer der Anmeldung**

EP 16 20 4942

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 2 138 520 A2 (BAYER MATERIALSCIENCE AG [DE]) 30. Dezember 2009 (2009-12-30) * Ansprüche 1-7; Verbindung II * ----- | 1-15 | INV. C08G18/66 C08G18/71 C08G18/30 |
| X,D | WO 2015/082316 A1 (BASF SE [DE]) 11. Juni 2015 (2015-06-11) * Anspruch 1; Verbindungen A4, A5, A6 * ----- | 1-15 | C08G18/32 C08G18/48 C08K5/315 |

**RECHERCHIERTE SACHGEBIETE (IPC)**

C08G
C08K

Der vorliegende Recherchenbericht wurde für alle Patentansprüche erstellt

| Recherchenort | Abschlußdatum der Recherche | Prüfer |
|---|---|---|
| München | 2. Mai 2017 | Buestrich, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 20 4942

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-05-2017

| Im Recherchenbericht angeführtes Patentdokument | Datum der Veröffentlichung | Mitglied(er) der Patentfamilie | Datum der Veröffentlichung |
|---|---|---|---|
| EP 2138520 A2 | 30-12-2009 | CA 2670190 A1 | 28-12-2009 |
| | | CN 101613447 A | 30-12-2009 |
| | | DE 102008030763 A1 | 31-12-2009 |
| | | EP 2138520 A2 | 30-12-2009 |
| | | ES 2526550 T3 | 13-01-2015 |
| | | JP 5519963 B2 | 11-06-2014 |
| | | JP 2010007072 A | 14-01-2010 |
| | | US 2009326089 A1 | 31-12-2009 |
| WO 2015082316 A1 | 11-06-2015 | CN 105764946 A | 13-07-2016 |
| | | EP 3077436 A1 | 12-10-2016 |
| | | JP 2017502111 A | 19-01-2017 |
| | | KR 20160098299 A | 18-08-2016 |
| | | US 2016304686 A1 | 20-10-2016 |
| | | WO 2015082316 A1 | 11-06-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2138520 A
- WO 2015082316 A
- EP 1674515 A
- DE 1694142 A
- DE 1694215 A
- DE 1720768 A
- EP 0007502 A
- US 1922451 A
- US 2674619 A
- US 1922459 A
- US 3190927 A
- US 3346557 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- EP 2046861 A
- US 4089835 A
- US 4260530 A
- GB 2072204 A
- DE 3103757 A1
- US 4374209 A
- EP 0000389 A
- EP 0176013 A
- EP 355000 A

**In der Beschreibung aufgeführte Nicht-Patentliteratur**

- Polyurethane. Kunststoff-Handbuch. Carl Hanser Verlag, 1966, vol. VII
- Neuauflage dieses Buches. Carl Hanser Verlag, 1993
- Reaction Polymers. Kunststoffhandbuch, Band 7, Polyurethane. vol. 7
- Kunststoff-Handbuch. Carl-Hanser-Verlag, 1993, vol. VII, 104-127
- **W. SIEFKEN.** Justus Liebigs Annalen der Chemie. vol. 562, 75-136
- Kunststoff-Handbuch. Carl-Hanser-Verlag, 1993, vol. VII, 139-265